# EUROPEAN PATENT APPLICATION

(11) **EP 4 779 367 A1**
(43) Date of publication of application: **22.07.2026**
(21) Application number: 24878787.1
(22) Date of filing: 23.09.2024
(51) Int. Cl.: G02B 6/02

(54) **HOLLOW-CORE MICROSTRUCTURED FIBER WITH REFRACTIVE INDEX MARKS, PREPARATION METHOD THEREFOR AND DETECTION METHOD**

(30) Priority: 19.10.2023 CN 202311354050
(71) Applicant: YANGTZE OPTICAL FIBRE AND CABLE JOINT STOCK LIMITED COMPANY, East Lake High-tech Development Zone Wuhan Hubei 430073 (CN)
(72) Inventor: LI, Peng, Wuhan, Hubei 430074 (CN); WANG, Ruichun, Wuhan, Hubei 430074 (CN); ZHANG, Lei, Wuhan, Hubei 430074 (CN); JIA, Anqing, Wuhan, Hubei 430074 (CN); WU, Wei, Wuhan, Hubei 430074 (CN)
(74) Representative: Lorenz Seidler Gossel Part. mbB
(86) International application number: PCT/CN2024/120316
(87) International publication number: WO 2025/082139

(57) **Abstract**

Disclosed is a hollow-core microstructured optical fiber with refractive index marking, and methods for manufacturing and detecting the same. The optical fiber includes a cladding hollow-core sleeve and a plurality of anti-resonant microstructured units arranged on an inner wall of the cladding hollow-core sleeve, where the plurality of anti-resonant microstructured units are rotationally symmetric. The cladding hollow-core sleeve is provided with one or more refractive index marking units, with a refractive index difference existing between each of the refractive index marking units and the sleeve, and an end face of the hollow-core microstructured optical fiber has an asymmetric structure. The disclosure provides a hollow-core microstructured optical fiber with refractive index marking and a method for manufacturing the same, which can quickly identify the anti-resonant microstructured units in the hollow-core microstructured optical fibers, facilitate online control of the size uniformity of the anti-resonant microstructured units, thereby advantageously reducing the transmission loss of the hollow-core microstructured optical fiber; meanwhile, during coupling of the hollow-core microstructured optical fibers, it is convenient to identify different anti-resonant microstructured units, thereby reducing the coupling loss of the hollow-core microstructured optical fibers.

## Description

### TECHNICAL FIELD

The present disclosure belongs to the field of optical communication, and more specifically, relates to a hollow-core microstructured optical fiber with refractive index marking, and methods for manufacturing and detecting the same.

### BACKGROUND

A hollow-core microstructured optical fiber has characteristics of simple structure, hollow-core single-mode light conduction, and a wide transmission spectrum, and has been significantly applied in fields such as light-filling matter interactions, nonlinear optics, gas detection, gas laser generation, optical fluid technology, etc. A fiber core light conduction with a large air hole has characteristics of ultra-low Rayleigh scattering, low nonlinear coefficient, and tunable chromatic dispersion, and may provide a higher laser damage threshold, such that the fiber core light conduction with a large air hole may be potentially applied in high-power laser transmission, ultraviolet/mid-infrared light transmission, pulse compression, optical solution transmission, etc. Since an air core has characteristics of ultra-low loss, low chromatic dispersion, low nonlinearity, and a propagation speed close to speed of light, the development of hollow-core microstructured optical fiber communication transmission and communication devices may be implemented, thereby laying a foundation for construction and development of a next generation of optical communication system having ultra-large capacity, low delay, and high speed.

Although hollow-core microstructured optical fibers have significant advantages in designs and applications, their transmission loss has always been higher than that of silica fibers. In recent years, it has been found that hollow-core microstructured optical fibers with a reasonable structural design based on the anti-resonant principle can effectively reduce transmission loss, and have the potential to be used as optical fibers for ultra-long distance communication. Further reduction of attenuation is an important problem in the field of hollow-core microstructured optical fiber manufacturing.

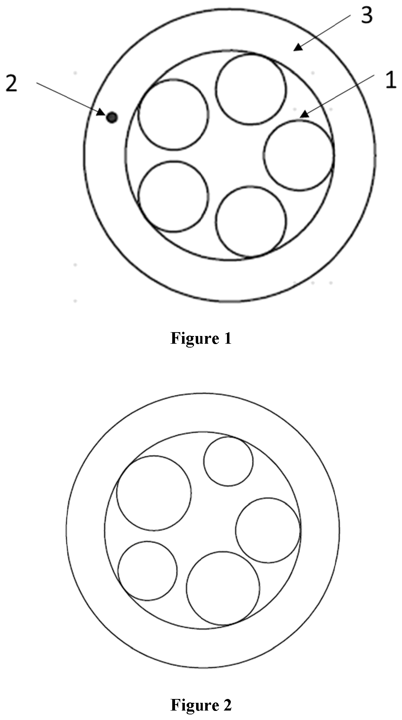

Although it is known that hollow-core microstructured optical fibers, especially optical fibers with nested structural elements, can significantly reduce the attenuation of optical fibers, in the manufacturing process of hollow-core microstructured optical fibers, they have essential differences from existing solid optical fibers. The microscopic stereo-structure of the hollow-core microstructured optical fibers is the basis for their light guidance. In order to maintain or form a specific microstructure, gas needs to be introduced during the drawing process. Due to the non-uniformity of raw materials, deviation in the stacking process of nested structural elements, uneven thermal field distribution during the drawing process, etc., the obtained hollow-core microstructured optical fibers may have anti-resonant structural elements with uneven size, as shown in Figure 2. Such an unevenness in the geometric structure will greatly affect the transmission loss of the hollow-core microstructured optical fibers. However, just because such a manufacturing method is disruptive compared to those of existing solid fibers, it is not possible to solve the problem of geometric non-uniformity by using the common method of increasing the fiber size of solid fibers.

### SUMMARY

In view of the above defects in the prior art or improvement needs, the disclosure provides a hollow-core microstructured optical fiber with refractive index marking, and methods for manufacturing and detecting the same. The objective is to form an asymmetric end face structure by using distinguishable refractive index marking units on the cladding hollow-core sleeve for forming the outer cladding layer, to mark a plurality of anti-resonant microstructured units which are rotationally symmetric, evaluate the geometric uniformity thereof, and better control the drawing process of the hollow-core microstructured optical fiber, thereby solving the technical problem of large differences between transmission performance and theoretical design caused by poor geometric uniformity of the end face of the existing hollow-core microstructured optical fiber.

In order to achieve the above objective, according to one aspect of the disclosure, there is provided a hollow-core microstructured optical fiber with refractive index marking, including a cladding hollow-core sleeve and a plurality of anti-resonant microstructured units arranged on an inner wall of the cladding hollow-core sleeve, where the plurality of anti-resonant microstructured units are rotationally symmetric.

The cladding hollow-core sleeve is provided with one or more refractive index marking units, with a refractive index difference existing between each of the refractive index marking units and the sleeve, and an end face of the hollow-core microstructured optical fiber has an asymmetric structure.

Preferably, in the hollow-core microstructured optical fiber with refractive index marking, the cladding hollow-core sleeve has circular outer and inner wall contours.

Preferably, in the hollow-core microstructured optical fiber with refractive index marking, a maximum refractive index difference between each of the refractive index marking units and the cladding hollow-core sleeve is greater than or equal to 0.05%.

Preferably, in the hollow-core microstructured optical fiber with refractive index marking, each of the refractive index marking units is made of a material selected from the group consisting of high-purity silica, doped silica, multi-component glass, or plastic.

Preferably, in the hollow-core microstructured optical fiber with refractive index marking, an area of a single one of the refractive index marking units accounts for 0.002% to 2% of an area of a cladding of the optical fiber; and the cladding of the optical fiber includes an outer cladding layer formed by the cladding hollow-core sleeve and an anti-resonant cladding layer formed by the anti-resonant microstructured units.

Preferably, in the hollow-core microstructured optical fiber with refractive index marking, at least one of the refractive index marking units is located in a region between lines connecting geometric centers of adjacent anti-resonant microstructured units and a geometric center of the optical fiber, and is close to one of the adjacent anti-resonant microstructured units.

Preferably, in the hollow-core microstructured optical fiber with refractive index marking, the cladding hollow-core sleeve is provided with multiple refractive index marking units, which have identifiable differences in contour shape and/or area.

Preferably, in the hollow-core microstructured optical fiber with refractive index marking, each of the refractive index marking units has a circular, rectangular, or regular polygonal outer contour.

According to another aspect of the disclosure, there is provided a method for manufacturing the hollow-core microstructured optical fiber with refractive index marking, including steps of: drilling a hole in a region of a hollow-core microstructured optical fiber preform used for forming a cladding hollow-core sleeve; embedding core rods, each having a maximum refractive index difference of greater than or equal to 0.05% from the cladding hollow-core sleeve, into the hole; assembling the preform used for forming the hollow-core microstructured optical fiber with refractive index marking; and drawing the preform to obtain the hollow-core microstructured optical fiber with refractive index marking.

According to yet another aspect of the disclosure, there is provided a method for detecting a drawn hollow-core microstructured preform, including steps of:
1) cleaving the hollow-core microstructured optical fiber with refractive index marking provided by the disclosure at a preset position;
2) imaging a cleaved end face obtained in step 1) by using transmitted light to obtain an image of the end face of the hollow-core microstructured optical fiber at that position;
3) performing anti-resonant microstructure identification on the image of the end face obtained in step 2) based on respective refractive index marking units, to obtain images of individual anti-resonant microstructured units; and
4) extracting geometric parameters from the images of the individual anti-resonant microstructured units obtained by identification in step 3), and determining a geometric uniformity of the hollow-core microstructured optical fiber.

In general, compared with the prior art, the above technical solutions conceived by the disclosure can achieve several beneficial effects as described in details below.

By utilizing the hollow-core microstructured optical fiber with refractive index marking provided by the disclosure, an asymmetric end face structure is formed by providing distinguishable refractive index marking units on the cladding hollow-core sleeve that forms an outer cladding layer, thereby marking a plurality of anti-resonant microstructured units that are rotationally symmetric, and enabing evaluation and detection of geometric uniformity without damaging the uniformity of the geometric contour of the end face of the optical fiber and without affecting the airflow during fiber drawing, such that the anti-resonant microstructured units are identifiable and can be designed as close as possible to a theoretical designed shape.

The disclosure provides a hollow-core microstructured optical fiber with refractive index marking and a method for manufacturing the same, which can quickly identify the anti-resonant microstructured units in the hollow-core microstructured optical fibers, facilitate online control of the size uniformity of the anti-resonant microstructured units, thereby advantageously reducing the transmission loss of the hollow-core microstructured optical fiber; meanwhile, during coupling of the hollow-core microstructured optical fibers, it is convenient to identify different anti-resonant microstructured units, thereby reducing the coupling loss of the hollow-core microstructured optical fibers.

### BRIEF DESCRIPTION OF THE DRAWINGS

Fig. 1 is a structural schematic diagram of a hollow-core microstructured optical fiber preform with refractive index marking units provided in a first embodiment of the disclosure;
Fig. 2 is a schematic diagram of a hollow-core microstructured optical fiber without marking, which is a comparative schematic diagram of the hollow-core microstructured optical fiber as compared to the first embodiment;
Fig. 3 is a schematic diagram of a sleeve with a hole provided in the first embodiment of the disclosure;
Fig. 4 is a structural schematic diagram of an end face of a hollow-core microstructured optical fiber provided in the first embodiment of the disclosure;
Fig. 5 is a structural schematic diagram of an end face of a hollow-core microstructured optical fiber provided in a second embodiment of the disclosure; and
Fig. 6 is a structural schematic diagram of an end face of a hollow-core microstructured optical fiber provided in a third embodiment of the disclosure.

In the accompanying drawings, similar reference numerals denote identical or similar elements or structures.

### LIST OF REFERENCE NUMERALS

1 anti-resonant microstructured unit
2 refractive index marking unit
3 cladding hollow-core sleeve
4 hole on the sleeve

### DETAILED DESCRIPTION OF THE EMBODIMENTS

The technical problems to be solved, technical solutions, and advantages of the disclosure will become apparent from the following detailed description with reference to the embodiments. It should be understood that the specific embodiments described herein are merely for explaining the disclosure and are not intended to limit the disclosure. In addition, the technical features involved in various embodiments of the disclosure described below may be combined as long as they do not conflict with each other.

The hollow-core microstructured optical fiber with refractive index marking provided by the disclosure includes a cladding hollow-core sleeve and a plurality of anti-resonant microstructured units arranged on an inner wall of the cladding hollow-core sleeve, where the plurality of anti-resonant microstructured units are rotationally symmetric.

The cladding hollow-core sleeve is made of glass, and the cladding hollow-core sleeve has outer and inner wall contours.

The cladding hollow-core sleeve is provided with one or more refractive index marking units, with a refractive index difference existing between each of the refractive index marking units and the sleeve. A maximum refractive index difference between each of the refractive index marking units and the cladding hollow-core sleeve is greater than or equal to 0.05%. The refractive index marking unit is made of a material selected from the group consisting of high-purity silica, doped silica, multi-component glass, or plastic. Each of the refractive index marking units has a circular, rectangular, or regular polygonal outer contour.

An area of a single one of the refractive index marking units accounts for 0.002% to 2% of an area of a cladding of the optical fiber; and the cladding of the optical fiber includes an outer cladding layer formed by the cladding hollow-core sleeve and an anti-resonant cladding layer formed by the anti-resonant microstructured units.

At least one of the refractive index marking units is located in a region between lines connecting geometric centers of adjacent anti-resonant microstructured units and a geometric center of the optical fiber, and is close to one of the adjacent anti-resonant microstructured units. The region between lines connecting geometric centers of adjacent anti-resonant microstructured units and the geometric center of the optical fiber is generally sector-shaped, and the cladding hollow-core sleeve in this region is generally in the form of an annular sector. For a hollow-core microstructured optical fiber having rotationally symmetric anti-resonant microstructured units, the refractive index marking unit is located in this region, such that the end face of the optical fiber exhibits asymmetry, and an asymmetric end-face image of the optical fiber can be acquired.

In order to improve recognizability, a plurality of refractive index marking units may be adopted. In a preferred embodiment, the plurality of refractive index marking units have identifiable differences in contour shape and/or area.

At present, there is no mature and feasible technical solution for geometric uniformity detection of anti-resonant microstructured optical fibers. According to the concept of the present application, end face detection is performed by using an image method, and geometric features are extracted to solve the problem of geometric uniformity detection. The difficulty of image detection lies in the fact that the end faces of anti-resonant microstructured fibers theoretically exhibit relatively perfect symmetry and are difficult to distinguish from each other. If a shape marking is adopted, for example, by adding a structure inside the sleeve or grooving the sleeve, the regular end face structure of the optical fiber would be destroyed, which may lead to deterioration of or a change in transmission performance.

Whether explaining the guiding principle of the hollow-core anti-resonant optical fibers based on the anti-resonant waveguide theory or the suppression coupling theory, a more perfect fiber end face structure that is more consistent with a design will always mean that a better and more controllable transmission performance will be achieved.

In order to minimize the impact on the transmission performance of hollow-core microstructured optical fiber, in the disclosed solution, the refractive index marking unit is arranged in the outer cladding formed by the sleeve. On the premise of maintaining the geometric structure of the end face of the hollow-core microstructured optical fiber unchanged, when the image method is used for end face detection, a marking that destroys the symmetry of the end face of the hollow-core microstructured optical fiber is formed, such that the plurality of anti-resonant microstructured units may be identified, and then geometric parameters may be extracted to determine geometric uniformity.

The method for manufacturing the hollow-core microstructured optical fiber with refractive index marking provided by the disclosure mainly includes steps of: drilling a hole in a region of a hollow-core microstructured optical fiber preform used for forming a cladding hollow-core sleeve; embedding core rods, each having a maximum refractive index difference of greater than or equal to 0.05% from the cladding hollow-core sleeve, into the hole; assembling the preform used for forming the hollow-core microstructured optical fiber with refractive index marking; and drawing the preform to obtain the hollow-core microstructured optical fiber with refractive index marking. The core rod may be made of a material selected from the group consisting of high-purity silica, doped silica, multi-component glass, or plastic, and may also have a non-uniform refractive index profile, such as an optical waveguide structure. Such a core rod may be prepared by an in-tube deposition method.

The method for detecting a drawn hollow-core microstructured preform provided by the disclosure includes steps of:
1) cleaving the hollow-core microstructured optical fiber with refractive index marking provided by the disclosure at a preset position;
2) imaging a cleaved end face obtained in step 1) by using transmitted light to obtain an image of the end face of the hollow-core microstructured optical fiber at that position, where a clear contour appears at the refractive index difference interface under the action of transmitted light, and thus the refractive index marking unit has recognizability on the image of the end face;
3) performing anti-resonant microstructure identification on the image of the end face obtained in step 2) based on respective refractive index marking units, to obtain images of individual anti-resonant microstructured units; and
4) extracting geometric parameters from the images of the individual anti-resonant microstructured units obtained by identification in step 3), and determining a geometric uniformity of the hollow-core microstructured optical fiber.

Exemplary embodiments are described below.

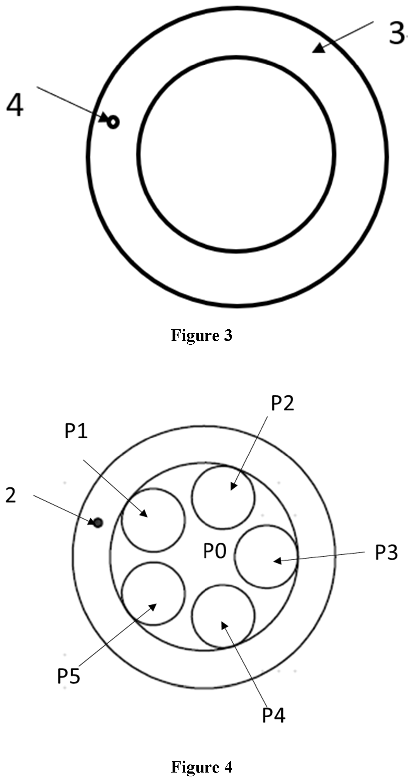

The end face structure of a typical hollow-core microstructured optical fiber is shown in Figure 1. The cladding hollow-core sleeve forms the outer cladding layer, and the inner wall thereof is provided with a plurality of anti-resonant microstructured units, which are rotationally symmetric to form an anti-resonant cladding layer. The number of anti-resonant microstructured units is n, and generally, n ≥ 3. In the embodiments, n is taken as 5. The anti-resonant microstructured unit is composed of components having a single-layered or multi-layered negative curvature structure. An example of the component with a single-layered curvature structure is shown in Figure 1, and an example of the component with a multi-layered negative curvature structure is shown in Figures 4 to 6.

The cladding hollow-core sleeve is provided with one or more refractive index marking units, and a refractive index difference exists between each of the refractive index marking units and the sleeve. A maximum refractive index difference between each of the refractive index marking units and the cladding hollow-core sleeve is greater than or equal to 0.05%. The refractive index marking unit is made of a material selected from the group consisting of high-purity silica, doped silica, multi-component glass, or plastic. In the embodiment, doped silica glass is used.

A method for manufacturing the hollow-core microstructured optical fiber with refractive index marking described above includes the following steps.

In step 1, an anti-resonant microstructured unit is prepared: a mother tube is drawn in a high-temperature drawing furnace to obtain a required capillary tube, where the capillary tube may be subjected to secondary processing, such as cutting, polishing, welding, etc., according to design requirements.

In step 2, a sleeve with one or more holes is prepared: drilling is performed on the sleeve to obtain a sleeve with one or more holes.

In step 3, a marking core rod is prepared: a doped core rod is prepared by adopting a preform doping process, where a refractive index difference exists between the doped core rod and the sleeve, with a maximum refractive index difference being greater than or equal to 0.05%; and then the doped core rod is drawn into a capillary rod, which is the required marking core rod.

In step 4, preform stacking is performed: the marking core rod obtained in Step 3 is inserted into the hole of the sleeve with a hole prepared in Step 2, and the anti-resonant microstructured units obtained in Step 1 are stacked and assembled in the sleeve to form a hollow-core microstructured optical fiber preform with refractive index marking.

In step 5, the hollow-core microstructured optical fiber preform with refractive index marking obtained in Step 4 is directly drawn into a hollow-core microstructured optical fiber, or an intermediate preform is obtained and then inserted into a sleeve for further drawing into a hollow-core microstructured optical fiber. With the marking core rod, during the drawing process, it is possible to quickly distinguish the corresponding relationship between the anti-resonant microstructured units in the optical fiber and the anti-resonant microstructured units in the preform, such that the size of the anti-resonant microstructured units in the optical fiber may be adjusted by controlling the air pressure within the anti-resonant microstructured units in the preform.

Furthermore, the anti-resonant microstructured unit, the sleeve, and the marking core rod may be made of a material selected from the group consisting of high-purity silicon dioxide, doped silica (doped with one or more elements such as germanium, fluorine, chlorine, boron, aluminum, etc.), multi-component glass, plastic, etc., as long as a refractive index difference exists between the sleeve and the marking core rod. In the embodiments of the application, a doped adaptive material is used.

Further, the hollow-core microstructured optical fiber has a cladding diameter greater than or equal to 100 µm.

Further, the hollow-core microstructured optical fiber manufactured by the disclosed method has lower transmission loss, with the minimum transmission loss of less than or equal to 30 dB/km, preferably less than or equal to 1 dB/km.

Further, the hollow-core microstructured optical fiber manufactured by the disclosed method has low fusion splicing loss, with a self-fusion splicing loss of less than or equal to 0.5 dB.

### Embodiment One

In this embodiment, a component with a single-layered negative curvature structure is adopted as an anti-resonant microstructured unit, as shown in Figure 1. In a manufacturing method thereof, a capillary tube is firstly prepared from a mother tube to form an anti-resonant microstructured unit 1, where the mother tube is drawn into a capillary tube in a drawing furnace, with an outer diameter of 5.4 mm and a wall thickness of 0.32 mm. Then, a hole parallel to the axial direction of the pure silica sleeve is drilled in the pure silica sleeve through a drilling process, as shown in Figure 3. A glass tube for forming a cladding hollow-core sleeve 3 has an outer diameter of 30 mm and an inner diameter of 26 mm. The drilled hole has a diameter of 3.0 mm for arranging a refractive index marking unit, and the hole is located between two anti-resonant microstructured units, and closer to one of them. A core rod with a refractive index difference of 0.20% is manufactured through a plasma vapor deposition process, and the core rod is drawn into a capillary rod with an outer diameter of 2.8 mm on a drawing tower to form a refractive index marking unit. One capillary rod is inserted into the drilled hole on the sleeve, and then 5 capillary tubes are stacked in the sleeve to form a hollow-core microstructured optical fiber preform with refractive index marking as shown in Figure 1. The hollow-core microstructured optical fiber preform with refractive index marking may be directly drawn into a hollow-core microstructured optical fiber in a drawing furnace. However, during drawing, due to temperature fluctuation, the anti-resonant microstructured units may have different sizes, as shown in Figure 2, with a maximum deviation of 33% in the outer diameter of the anti-resonant microstructured units. By means of transmission imaging of an end face of the optical fiber, a difference change in the image of the end face may be observed, the anti-resonant microstructured units may be marked, and the drawing process may be adjusted accordingly, to ensure the geometric uniformity of the optical fiber. For this purpose, it is necessary to introduce gases with different pressures into the anti-resonant microstructured units to ensure the sizes of the anti-resonant microstructured units are uniform. As shown in Figure 4, the required air pressures in the anti-resonant microstructured units are identified by the refractive index marking units. P0 is atmospheric pressure, and P1, P2, P3, P4, and P5 are air pressures in the anti-resonant microstructured units, with values of 33.6 mbar, 33.7 mbar, 34.1 mbar, 34.0 mbar, and 33.9 mbar, respectively. After being drawn into the optical fiber, the maximum deviation of the outer diameter of its anti-resonant microstructured units is 3.9%, and it had an attenuation of 4.8 dB/km at 1550 nm. When this hollow-core microstructured optical fiber is subjected to fusion splicing, the orientation of the capillary tube may be identified by the refractive index marking unit, thereby achieving more accurate docking, with a minimum fusion splicing loss of 0.44 dB.

### Embodiment Two

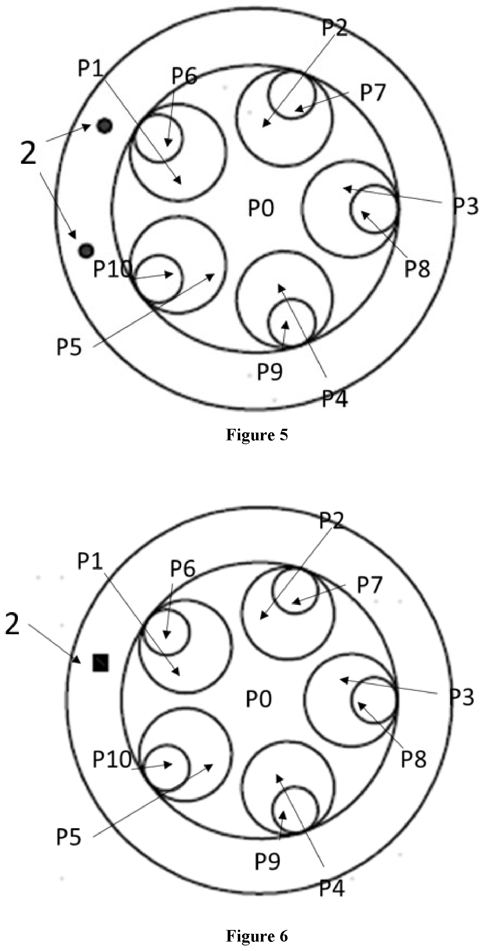

In this embodiment, a component with a multi-layered negative curvature structure is used as an anti-resonant microstructured unit, and a nested tangent capillary glass tube is used for forming the anti-resonant microstructured unit, and at a tangent position, is in contact with an inner wall of a glass tube used for forming a cladding hollow-core sleeve 3, as shown in Figure 5. A manufacturing method thereof is as follows: firstly, two sizes of capillaries are prepared from a mother tube, where the larger capillary tube has an outer diameter of 13.6 mm and a wall thickness of 0.49 mm, and the smaller capillary tube has an outer diameter of 6.8 mm and a wall thickness of 0.54 mm. Secondly, on a pure silica sleeve, two holes parallel to an axial direction of the sleeve are drilled through a drilling process to arrange a refractive index marking unit, wherein the relative positions of the two holes are located such that an angle between the lines between them and a center of the structure is less than 72°. Since the anti-resonant microstructured units are uniformly arranged in a circumferential direction, the refractive index marking unit arranged in this way requires no consideration of the relative positions of the anti-resonant microstructured units, and must be able to destroy the rotational symmetry of the image of the end face. The sleeve has an outer diameter of 55 mm and an inner diameter of 43 mm, and the drilled holes have a diameter of 2.5 mm. A core rod with a refractive index difference of 0.60% is manufactured through a plasma vapor deposition process, and the core rod is drawn into a capillary rod with an outer diameter of 2.3 mm on a drawing tower. Two capillary rods are inserted into the drilled holes on the sleeve, and then five anti-resonant microstructured units are stacked in the sleeve to form a hollow-core microstructured optical fiber preform with a refractive index marking as shown in Figure 5. The hollow-core microstructured optical fiber preform with a refractive index marking may first be drawn, in a drawing furnace, into an intermediate preform with an outer diameter of 6.9 mm, and then is sleeved into another sleeve with an outer diameter of 16 mm and an inner diameter of 7.5 mm for drawing. As described in Embodiment 1, the sizes of the anti-resonant microstructured units are made uniform by introducing gases of different pressures into the anti-resonant microstructured units. By means of transmission imaging of an end face of the optical fiber, a difference change in the image of the end face may be observed, the anti-resonant microstructured units may be marked, and the drawing process may be adjusted accordingly, to ensure the geometric uniformity of the optical fiber. P0 is atmospheric pressure, and P1, P2, P3, P4, and P5 are the atmospheric pressures in the larger capillary tubes of the anti-resonant microstructured units, with values of 44.4 mbar, 44.7 mbar, 44.5 mbar, 44.6 mbar and 44.8 mbar, respectively. P6, P7, P8, P9, and P10 are the air pressures in the smaller capillary tubes of the anti-resonant microstructured units, with values of 113.3 mbar, 113.2 mbar, 113.7 mbar, 113.7 mbar and 113.9 mbar, respectively. The hollow-core microstructured optical fiber formed by drawing has a maximum deviation of 3.9% in the outer diameter of the larger capillary tube of the anti-resonant microstructured units, and a maximum deviation of 4.0% in the outer diameter of the smaller capillary tube of the anti-resonant microstructured units; and the fiber has an attenuation of 0.32 dB/km at 1550 nm. When this hollow-core microstructured optical fiber is subjected to fusion splicing, the orientation of the capillary tube may be identified by the refractive index marking unit, thereby achieving more accurate docking by means of the rotation function of a fusion splicing machine, with a minimum fusion splicing loss of 0.32 dB.

### Embodiment Three

In this embodiment, a component with a multi-layered negative curvature structure is used as an anti-resonant microstructured unit; and a nested tangent capillary glass tube is used for forming the anti-resonant microstructured unit, and at a tangent position, is in contact with an inner wall of a glass tube used for forming a cladding hollow-core sleeve 3, as shown in Figure 6. Firstly, two sizes of capillaries are prepared from a mother tube, wherein the larger capillary tube has an outer diameter of 10.35 mm and a wall thickness of 0.32 mm, and the smaller capillary tube has an outer diameter of 6.8 mm and a wall thickness of 0.44 mm. Secondly, on a pure silica sleeve, a square hole parallel to an axial direction of the sleeve is drilled through a drilling process. The sleeve has an outer diameter of 80 mm and an inner diameter of 40 mm, and the drilled hole has a side length of 3.0 mm. A core rod with a refractive index difference of 0.73% is manufactured through a plasma vapor deposition process, and the core rod is first polished to have a square shape, and then the square core rod is drawn into a capillary rod with a side length of 2.8 mm on a drawing tower. One capillary rod is inserted into the drilled hole on the sleeve, and then five anti-resonant microstructured units are stacked in the sleeve to form a hollow-core microstructured optical fiber preform with a refractive index marking as shown in Figure 6. The hollow-core microstructured optical fiber preform with a refractive index marking may first be drawn, in a drawing furnace, into an intermediate preform with an outer diameter of 5.5mm, and then is sleeved into another sleeve with an outer diameter of 10mm and an inner diameter of 6.0mm for drawing. As described in Embodiment 1, the sizes of the anti-resonant microstructured units are made uniform by introducing gases of different pressures into the anti-resonant microstructured units. By means of transmission imaging of an end face of the optical fiber, a difference change in the image of the end face may be observed, the anti-resonant microstructured units may be marked, and the drawing process may be adjusted accordingly, to ensure the geometric uniformity of the optical fiber. P0 is atmospheric pressure, and P1, P2, P3, P4, and P5 are the atmospheric pressures in the larger capillary tubes of the anti-resonant microstructured units, with values of 57.2 mbar, 57.5 mbar, 57.7 mbar, 57.5 mbar, and 57.2 mbar, respectively. P6, P7, P8, P9, and P10 are the air pressures in the smaller capillary tubes of the anti-resonant microstructured units, with values of 148.5 mbar, 148.2 mbar, 148.9 mbar, 149.4 mbar, and 149.6 mbar, respectively. The hollow-core microstructured optical fiber formed by drawing has a maximum deviation of 2.5% in the outer diameter of the larger capillary tube of the anti-resonant microstructured units, and a maximum deviation of 2.6% in the outer diameter of the smaller capillary tube of the anti-resonant microstructured units; and the fiber has an attenuation of 0.33 dB/km at 1550 nm. When this hollow-core microstructured optical fiber is subjected to fusion splicing, the orientation of the capillary tube may be identified by the refractive index marking unit, thereby achieving more accurate docking by means of the rotation function of a fusion splicing machine, with a minimum fusion splicing loss of 0.37 dB.

Those skilled in the art may easily understand that the above description only illustrates preferred embodiments of the disclosure, but is not intended to limit the disclosure. Any modifications, equivalent substitutions, and improvements made within the spirit and principle of the present disclosure should be encompassed within the scope of the disclosure.

## Claims

1. A hollow-core microstructured optical fiber with refractive index marking, comprising:
a cladding hollow-core sleeve; and
a plurality of anti-resonant microstructured units arranged on an inner wall of the cladding hollow-core sleeve, wherein the plurality of anti-resonant microstructured units are rotationally symmetric,
wherein the cladding hollow-core sleeve is provided with one or more refractive index marking units, with a refractive index difference existing between each of the refractive index marking units and the sleeve, and an end face of the hollow-core microstructured optical fiber has an asymmetric structure.

2. The hollow-core microstructured optical fiber with refractive index marking of claim 1, wherein the cladding hollow-core sleeve has circular outer and inner wall contours.

3. The hollow-core microstructured optical fiber with refractive index marking of claim 1, wherein a maximum refractive index difference between each of the refractive index marking units and the cladding hollow-core sleeve is ≥ 0.05%.

4. The hollow-core microstructured optical fiber with refractive index marking of claim 3, wherein each of the refractive index marking units is made of a material selected from the group consisting of high-purity silica, doped silica, multi-component glass, or plastic.

5. The hollow-core microstructured optical fiber with refractive index marking of claim 1, wherein an area of a single one of the refractive index marking units accounts for 0.002% to 2% of an area of a cladding of the optical fiber, and wherein the cladding of the optical fiber comprises an outer cladding layer formed by the cladding hollow-core sleeve and an anti-resonant cladding layer formed by the anti-resonant microstructured units.

6. The hollow-core microstructured optical fiber with refractive index marking of claim 1, wherein at least one of the refractive index marking units is located in a region between lines connecting geometric centers of adjacent anti-resonant microstructured units and a geometric center of the optical fiber, and is close to one of the adjacent anti-resonant microstructured units.

7. The hollow-core microstructured optical fiber with refractive index marking of claim 1, wherein the cladding hollow-core sleeve is provided with multiple refractive index marking units, which have identifiable differences in contour shape and/or area.

8. The hollow-core microstructured optical fiber with refractive index marking of claim 1, wherein each of the refractive index marking units has a circular, rectangular, or regular polygonal outer contour.

9. A method for manufacturing the hollow-core microstructured optical fiber with refractive index marking of any one of claims 1 to 8, comprising steps of:
drilling a hole in a region of a hollow-core microstructured optical fiber preform used for forming the cladding hollow-core sleeve;
embedding core rods, each having a maximum refractive index difference of ≥ 0.05% from the cladding hollow-core sleeve, into the hole;
assembling the preform used for forming the hollow-core microstructured optical fiber with refractive index marking; and
drawing the preform to obtain the hollow-core microstructured optical fiber with refractive index marking.

10. A method for detecting a drawn hollow-core microstructured preform, comprising steps of:
1) cleaving the hollow-core microstructured optical fiber with refractive index marking of any one of claims 1 to 8 at a preset position;
2) imaging a cleaved end face obtained in step 1) by using transmitted light to obtain an image of the end face of the hollow-core microstructured optical fiber at that position;
3) performing anti-resonant microstructure identification on the image of the end face obtained in step 2) based on respective refractive index marking units, to obtain images of individual anti-resonant microstructured units; and
4) extracting geometric parameters from the images of the individual anti-resonant microstructured units obtained by identification in step 3), and determining a geometric uniformity of the hollow-core microstructured optical fiber.
